# EUROPÄISCHE PATENTSCHRIFT

(11) **EP 1 057 008 B1**
(45) Veröffentlichungstag und Bekanntmachung des Hinweises auf die Patenterteilung: **09.09.2009**
(21) Anmeldenummer: 99910187.6
(22) Anmeldetag: 03.02.1999
(51) Int. Cl.: G01N 21/64, G01N 21/76, G01N 21/77

(54) **VERFAHREN UND VORRICHTUNG ZUR LUMINESZENZMESSUNG**
METHOD AND DEVICE FOR MEASURING LUMINESCENCE
PROCEDE ET DISPOSITIF DE MESURE DE LA LUMINESCENCE

(30) Priorität: 05.02.1998 CH 27898
(43) Veröffentlichungstag der Anmeldung: 06.12.2000
(60) Teilanmeldung: 09160566.7
(73) Patentinhaber: NOVARTIS AG, 4056 Basel (CH); Novartis-Erfindungen Verwaltungsgesellschaft m.b.H., 1230 Wien (AT)
(72) Erfinder: MAROWSKY, Gerd, D-37077 Göttingen (DE); NEUSCHAEFER, Dieter, CH-4132 Muttenz (CH); PAWLAK, Michael, D-79725 Laufenburg (DE)
(74) Vertreter: Pommerenke, Alexander
(86) Internationale Anmeldenummer: PCT/EP1999/000701
(87) Internationale Veröffentlichungsnummer: WO 1999/040415

(56) Entgegenhaltungen:
- EP-A- 0 244 394
- EP-A- 0 725 270
- EP-A- 0 793 090
- WO-A-95/33198

## Beschreibung

Die Erfindung betrifft ein Verfahren zur Anregung und Bestimmung einer Lumineszens von einem Analyten, der sich im Kontakt mit der Oberfäche der wellenleitenden Schicht eines Schichtwellenleiters befindet, bei dem man auf nicht-evaneszente Weise im Volumen des Analyten eine Lumineszens erzeugt, die aus dem Nahbereich an der Oberfläche der wellenleitenden Schicht in die wellenleitende Schicht des Schichtwellenleiters eingedrungene Lumineszensstrahlung zur optischen Messanordung führt, vorzugsweise über wenigstens ein Auskoppelelement für die Lumineszensstrahlung, und dann das Lumineszenslicht zum Beispiel optoelektronisch misst. Die Erfindung betrifft auch eine Messvorrichtung zur Durchführung des Verfahrens, und eine Sensorplattform.

In der Affinitätssensorik werden zur spezifischen Erkennung eines Analyten in einer Probe, welche aus einem komplexen Stoffgemisch bestehen kann, und zur Bindung der Analytmoleküle an der Oberfläche des Wellenleiters, im Bereich der Eindringtiefe des evaneszenten Feldes, biochemische Erkennungselemente entweder direkt oder über eine Haftvermittlungsschicht auf der Wellenleiteroberfläche immobilisiert. Zum Nachweis des Analyten wird die Probe in Lösung, entweder im Stopp und Fluß oder im Durchfluss, mit den auf der Wellenleiteroberfläche immobilisierten Erkennungselementen in Kontakt gebracht.

Auf dem Gebiet insbesondere der biochemischen Analytik sind in jüngerer Zeit planare Wellenleiter zur Erzeugung und Detektion evaneszent angeregter Strahlung entwickelt worden. Im evaneszenten Feld wird im Kontakt mit einer Analytprobe eine Lumineszens, zum Beispiel Fluoreszens, erzeugt, deren Messung eine qualitative oder quantitative Bestimmung von Substanzen auch in sehr niedrigen Konzentrationen erlaubt. Die isotrop in den Raum austretende evaneszent angeregte Strahlung wird optoelektronisch mittels geeigneter Messvorrichtungen wie zum Beispiel Photodioden, Photomultiplier oder CCD-Kameras bestimmt. Diese Methode ist zum Beispiel in der WO 95/33197 offenbart. Es ist auch möglich, den in den Wellenleiter zurück gekoppelten Anteil der evaneszent angeregten Strahlung über ein diffraktives optisches Element, zum Beispiel ein Gitter, auszukoppeln und zu messen. Diese Methode ist zum Beispiel in der WO 95/33198 beschrieben. Zur gleichzeitigen oder aufeinanderfolgen Durchführung von Mehrfachmessungen sind Vorrichtungen (Arrays) bekannt geworden, in der auf einer Sensorplattform wenigstens zwei Wellenleiter angeordnet sind, die getrennt mit Anregungslicht angesteuert werden, siehe zum Beispiel WO96/35940.

EP-A-0793090 beschreibt eine Messanordnung mit einem für Anregungs- und Messstrahlung transparenten Trägerelement, welches an einer ersten Grenzfläche ein lumineszensoptisches Sensorelement aufweist, über eine zweite Grenzfläche Anregungsstrahlung aus einer Strahlungsquelle aufnimmt und über eine dritte Grenzfläche Messstrahlung des Sensorelementes an einen Detektor einer Auswerteeinheit abgibt.

Die bekannten Messmethoden stellen hohe Anforderungen an die Positionierungsgenauigkeit des Anregungslichtes im Bezug auf die Einkoppelelemente, um eine ausreichende Lichteinkopplung und damit Empfindlichkeit zu erzielen. Die Verwendung von Justierkomponenten ist daher unerlässlich, was den technischen Aufbau kompliziert und was sich besonders bei der Konstruktion von Arrays bemerkbar macht.

Zudem ist man auf die Verwendung von im wesentlichen kohärenten Lichtes beschränkt, um die Positionierung auf die Konstanten der Einkoppeletemente und wie zum Beispiel diffraktiven Gittern abzustimmen.

Für klassische, hochmultimodale Wellenleiter, wie beispielsweise Multimode-Kappilaren, -Glasfasern oder -Glasplättchen kann das Problem der hohen Positionierungsanforderungen für die Einkopplung des Anregungslichts umgangen werden durch Anwendung des sogenannten "Lumineszenz-Konzentrationsprinzip, wie es beispielsweise in Sensors and Actuators B 38 bis 39 (1997), S. 96 bis 102 und S. 300 bis 304 beschrieben ist. Hier werden jedoch optische Wellenleiter verwendet, die aus dem Substrat selbst bestehen (ohne zusätzliche höherbrechende Schicht), das sich in einer Umgebung mit niedrigerem Brechungsindex befindet, und bei denen durch die geometrische Form eine Totalreflexion ermöglicht wird. Es wird beschrieben, dass das Lumineszenzlicht von auf der Substratberfläche aufgebrachten Emissionsquellen wie Polymermembrane mit einem eingebetteten Indikatorfarbstoff unter einem grossen Raumwinkel gesammelt, und dann im Glassubstrat zu einem an der Stirnseite des Wellenleiters befindlichen Detektor geführt. Typischerweise werden solche Indikatorfarbstoffe in hohen, beispielsweise millimolaren Konzentrationen eingesetzt. Zur Messung sehr niedriger Nachweiskonzentrationen sind solche dicken, als multimodale Wellenleiter verwendete Glasubstrate nicht geeignet.

Es wurde nun überraschend gefunden, dass sich auch im Falle von optischen Schichtwellenleitem, bestehend aus einem transparenten Träger und einer hochbrechenden wellenleitenden Schicht, das Prinzip des "Lumineszenzkollektors" anwenden lässt und somit die mit der Einkopplung des Anregungslichts verbundenen Probleme vollständig vermieden werden, wenn man die Anregungsstrahlung ohne Verwendung von Einkoppelelemeneten wenigstens teilweise direkt auf das Volumen der Analytprobe zur Erzeugung der Lumineszens richtet, zum Beispiel in einer Auflicht- oder Transmissionsanordnung. Die im Nahbereich der Oberfläche der wellenleitenden Schicht in der Analytprobe erzeugte Lumineszensstrahlung wird überraschend in einem messbaren Ausmass in die wellenleitende Schicht eingekoppelt, und kann zum Beispiel an der Stirnseite von optischen Fasern oder planaren Wellenleitern oder über Auskoppelelemente bei planaren Wellenleitern optoelektronisch erfasst werden. Im ferneren Analytvolumen erzeugte Lumineszens wird überraschend praktisch nicht in die wellenleitende Schicht gekoppelt, wodurch im Analyten erzeugte störende Lumineszensstrahlung ausgeschalten wird und eine nahezu hintergrundfreie Messung mit hoher räumlicher Selektivität, hoher Effizienz und hoher Empfindlichkeit ermöglicht wird.

Unter Schichtwellenleitern werden im Rahmen der Erfindung Schichtstrukturen aus einem transparenten Substrat, wie zum Beispiel Glas, Quartz oder Kunststoffen wie Polycarbonat, mit niedrigerem Brechungsindex als die auf einer Oberfläche aufgebrachten hochbrechende wellenleitende Schicht mit einem Brechungsindex von zum Beispiel mindestens 1,8. Die Dicke der wellenleitenden Schicht ist vorzugsweise so ausgewählt, dass sie nur eine einzige oder nur einige wenige (zum Beispiel bis zu 3) diskrete Moden von Licht einer bestimmten Wellenlänge führen können. Die Schichtwellenleiter werden im folgenden abgekürzt auch als Wellenleiter bezeichnet.

Es wurde ferner überraschend gefunden, dass nicht nur durch optische Strahlung angeregte Lumineszens, sondern sogar durch andere Mechanismen erzeugte Lumineszens wie zum Beispiel Chemie-, Tribo-, Bio- oder Elektrolumineszens, mit Schichtwellenleitern optoelektronisch gemessen werden kann, und somit eine neue Methode zur hochempfindlichen Bestimmung solcher Lumineszensstrahlung zur Verfügung gestellt wird.

Die direkte Bestrahlung der sich mit der Wellenleiteroberfläche im Kontakt befindenden Analytprobe bietet zum Beispiel folgende Vorteile:
sehr empfindliche Detektion mit Hilfe einer konventioneller Epifluoreszensanregung entsprechenden Konfiguration,
Verwendung kohärenter oder nichtkohärenter Strahlungsquellen, da die Lumineszens nicht durch das evaneszente Feld von in einer wellenleitenden Schicht geführten Anregungsstrahlung erzeugt wird, sondern im Nahbereich zur Oberfläche der wellenleitenden Schicht eines Wellenleiters erzeugte Lumineszensstrahlung gemessen wird,
Unterscheidung zwischen Volumenlumineszens und im optischen Nahbereich erzeugter Lumineszensstrahlung, was eine Messung in trüben Analytproben wie zum Beispiel Blut, Serum oder Reaktionsmischungen ermöglicht,
geringe Anforderungen an die Positionierungsgenauigkeit des Anregungslichts,
geringerer technischer Aufwand bei der Verwendung von Sensorplattformen mit wenigstens zwei getrennten wellenleitenden Bereichen (Sensorfeldern) für Simultanmessungen,
nahezu hintergrundfreie Detektion durch eine vom Ort der Anregung räumlich vollständig getrennte Detektionsposition,
technisch einfache Realisierung von Array-Formaten wie zum Beispiel einem Mikrotiterplattenformat unter Anpassung an genormte Grössen,
wirtschaftliche, kostengünstige Herstellung auch kompakter Formen von Sensorsystemen, da an optisch-mechanische Justiervorrichtungen geringere Anforderungen gestellt werden,
Verwendung preiswerter, beliebig wählbarer und kommerzieller Lichtquellen, wobei der Wellenlängenbereich durch Filter gegebenenfalls eingestellt wird,
Verwendung von Anregungslicht mit einer Wellenlänge von <450 nm und Möglichkeit der Anregung sogar mit UV-Licht,
Verwendung von Sensorplattformen mit offenen Aussparungen im nl- bis µl-Bereich für die Probenaufnahme,
Verwendung von Schichtwellenleitem,
geringere Energiedichte der Anregungsstrahlung unter Schonung der Analytproben.

Die Erfindung betrifft ein Verfahren zur Anregung und Bestimmung einer Lumineszens in einer Analytprobe, wie in den Ansprüchen 1 bis 7 definiert, und eine Vorrichtung zur Messung von durch Anregungsstrahlung in einer Analytprobe erzeugter Lumineszens, wie in den Ansprüchen 8 bis 12 definiert.

Ein erster Gegenstand der Erfindung ist ein Verfahren zur Anregung und Bestimmung einer Lumineszens in einer Analytprobe, die sich mit der wellenleitenden Schicht eines optischen Schichtwellenleiters in Kontakt befindet, das dadurch gekennzeichnet ist, dass man die Lumineszens durch nicht-evaneszente Anregung im Volumen der Analytprobe erzeugt, und die im Nahbereich der Oberfläche der wellenleitenden Schicht erzeugte Lumineszensstrahlung nach dem Eindringen in besagte wellenleitende Schicht zu der Messvorrichtung leitet und bestimmt.

Im Nahbereich der Oberfläche der wellenleitenden Schicht (im folgenden als optisches Nahfeld bezeichnet) bedeutet zum Beispiel einen Abstand von höchstens etwa einer Wellenlänge des Lumineszenslichts, bevorzugt von höchstens einer halben Wellenlänge, und besonders bevorzugt von höchstens etwa einer viertel Wellenlänge von der Oberfläche der wellenleitenden Schicht.

Die Lumineszens, zum Beispiel eine Fluoreszens, kann auf verschiedene Weise angeregt werden. Im Bereich der Probenaufnahme können Elektroden angeordnet sein, mit denen man unter Anlegung eines elektrischen Feldes eine Lumineszens anregt. Eine Chemilumineszens kann in der Analytprobe mittels Kombination geeigneter Chemikalien erzeugt werden. Die Anregung von Lumineszens erfolgt bevorzugt optisch durch die direkte (ohne Einkoppelelemente), nicht-evaneszente Bestrahlung der Analytprobe mit Licht geeigneter Wellenlängen. Der Wellenlängenbereich kann zum Beispiel vom kurzwelligen UV bis zum nahen IR reichen, bevorzugt von 200 bis 2000 nm, bevorzugter von 250 bis 1400 nm, und besonders bevorzugt 250 bis 1000 nm. Eine evaneszente Lumineszensanregung mit UV-Licht unter Verwendung von planaren Wellenleitern mit Einkoppelelementen ist nur eingeschränkt möglich, da Gitterperioden unter 300 nm zur Einkopplung der UV-Strahlung nur unter grossem Aufwand herstellbar sind, und weiterhin UV-Strahlung im Wellenleiter sehr stark gedämpft wird. Das erfindungsgemässe Verfahren ermöglicht überraschend zum einen die Verwendung von UV-Licht, und zum anderen die Ausnutzung der Eigenlumineszens von zu bestimmenden Molekülen mittels UV Bestrahlung der Analytprobe, so dass gegebenenfalls keine Luminophor-Labels wie zum Beispiel Fluorophor-Labels eingesetzt werden müssen.

Es kann sowohl kohärente wie nicht-kohärente Strahlung und somit beliebige, zum Beispiel eine polychromatische Lichtquelle, verwendet werden. Die Strahlung kann mit Linsen oder Spiegeln fokussiert und/oder mittels Filtern können engere Wellenlängenbereiche eingestellt werden. Es kann auch polarisierte Strahlung verwendet werden. Geeignete Strahlungsquellen sind zum Beispiel Laser, Diodenlaser, und Weisslicht von Leuchtdioden oder Leucht-und Glühlampen, wie zum Beispiel Halogen- oder Quecksilberdampflampen.

Optische Schichtwellenleiter sind in grosser Vielzahl bekannt und teilweise käuflich. Für das erfindungsgemässe Verfahren können diese unterschiedliche geometrische Formen aufweisen, zum Beispiel optische Fasern, zylinderförmige Körper oder planare Wellenleiter. Das Trägermaterial mit niedrigerem Brechungsindex kann aus Kunstoffgläsern (zum Beispiel Polycarbonat) oder anorganischen Gläsern (Gläser, Quarz, SiO₂) und die wellenleitende Schicht mit höherem Brechungsindex aus Kunststoffen oder Metalloxiden wie Ta₂O₅, TiO₂, ZnO, HfO₂, ZrO₂ oder Nb₂O₅ ausgewählt sein. Bevorzugt sind Wellenleiter mit sehr dünnen wellenleitenden Schichten und hohem Brechungsindex, in denen nur wenige (zum Beispiel 1 bis 3) Moden geführt werden.

Die Dicke der wellenleitenden Schicht kann etwa 50 nm bis 2000 nm, bevorzugt 80 nm bis 400 nm, ganz besonders bevorzugt 100 bis 200 nm betragen. Die optimale Auswahl der Schichtdicke ist abhängig von der Wellenlänge der zu detektierenden Lumineszenz. Bevorzugt beträgt sie 50 nm bis zu einer Wellenlänge, besonders bevorzugt von 50 nm bis zu einer halben Wellenlänge, ganz besonders bevorzugt von 50 nm bis zu einer viertel Wellenlänge. Gleichzeitig werden wellenleitende Schichten mit einem möglichst hohen Brechungsindex, d. h. vorzugsweise von mindestens 1.8, besonders bevorzugt von mindestens 2.0 und ganz besonders bevorzugt von mindestens 2.2 bevorzugt. Mit diesen Parameterwerten wird erreicht, dass das optische Nahfeld direkt an der Oberfläche des Wellenleiters besonders stark ist und mit dem Abstand von der Wellenleiteroberfläche besonders stark abfällt, was zu einer sehr wirksamen und räumlich hochspezifischen (d. h. im wesentlichen auf wenige 100 nm von der Oberfläche beschränkten) Einkopplung der Lumineszenz in den Wellenleiter führt.

Planare Wellenleiter sind mit wenigstens einem Auskoppelelement für die Lumineszensstrahlung versehen, zum Beispiel Prismen oder bevorzugt diffraktiven Elementen.

Unter diffraktiven Elementen werden Auskoppelelemente für Lichtstrahlung verstanden. Häufig werden Gitter verwendet, die auf verschiedene Weise hergestellt werden können. Weit verbreitet ist die Gitterherstellung mittels photolithographischer Aetztechniken. Weiterhin können solche Gitter in dem transparenten Träger und/oder der wellenleitende Schicht angeordnet sein und bei der Formgebung oder nachträglich eingeprägt werden. Es ist auch möglich, solche Gitter mittels ablativer Verfahren (Laserbestrahlung) zu erzeugen. Andere Herstellungsverfahren sind holographische Aufzeichnungen oder Einlagerung von Ionen durch Ionenbeschuss. Die Anpassung der Gitterparameter wie Modulationstiefe, Verhältnis Steg zu Nut und Gitterperiode an die Wellenlänge der Lumineszenstrahlung für eine optimierte Auskopplungseffizienz sind bekannt. Die Dicke der wellenleitenden Schicht kann 100 bis 200 nm betragen. Die Modulationstiefe kann 5 bis 100 nm, bevorzugt 5 bis 60 nm betragen. Das Verhältnis von Modulationstiefe zu Dicke der wellenleitenden Schicht ist bevorzugt kleiner als 0,5. Die Periode der diffraktiven Elemente (Beugungsgitter) kann zum Beispiel von 200 bis 1000 nm betragen.

Planare Wellenleiter sind bekannt und käuflich. Sie können ein oder mehrere sich gegenüberliegende diffraktive Elemente zur Auskopplung der angeregten Lumineszenzstrahlung aufweisen. Zur Detektion von Lumineszenz einer einzigen Emissionsbande sind die diffraktiven Elemente bevorzugt monodiffraktiv ausgebildet. Sollen Lumineszenzen unterschiedlicher Wellenlänge detektiert werden, so sind die diffraktiven Elemente bevorzugt multidiffraktiv ausgebildet. Multidiffraktive Gitterkoppler, zur Verwendung in Messanordnungen zur Detektion von Änderungen des sogenannten effektiven Brechungsindex im evaneszenten Feld eines Wellenleiters, sind ebenfalls bekannt und beispielsweise in der WO 95/14225 beschrieben.

Die einzelnen Linien der diffraktiven Elemente können gerade oder gebogen und im Falle nur eines vorliegenden diffraktiven Elementes auch kreisförmig ausgebildet sein. Wenn zwei diffraktive Elemente vorhanden sind, können diese gleiche Gitterkonstanten aufweisen, oder verschiedene Gitterkonstanten, um zum Beispiel das abgestrahlte Lumineszenzlicht auf nur einen Detektor zu richten.

Bei der Durchführung des erfindungsgemässen Verfahrens kann ein Teil oder das gesamte Volumen einer Analytprobe bestrahlt werden. Die Bestrahlung kann in einem schrägen Winkel, bevorzugt im rechten Winkel zur Wellenleiteroberfläche erfolgen. Je nach Verwendung von optischen Fasern oder planaren Wellenleitern können die Messvorrichtungen unterschiedlich ausgebildet und angeordnet sein.

Bei Verwendung von optischen Glasfasern kann das Verfahren so durchgeführt werden, dass man den Analyten in eine Messzelle gibt, zum Beispiel eine Küvette, die geschlossen oder als Durchflusszelle ausgebildet sein kann. Eine oder mehrere Glasfasern können mit einem als Messkopf ausgebildeten Verschluss verbunden sein. Die zur Stirnseite einer Glasfaser geführte Lumineszensstrahlung kann dann optoelektronisch gemessen werden. Die Bestrahlung der Analytprobe kann durch die Küvette erfolgen, gegebenenfalls über ein optisches Fenster. Es kann ein Teil oder das gesamte Volumen einer Analytprobe bestrahlt werden. Die Bestrahlung kann in einem schrägen Winkel, bevorzugt im rechten Winkel zur Glasfaser erfolgen.

Bei Verwendung von planaren Wellenleitern wird die Anordnung der Strahlungsquelle, Detektionselemente und Probenaufgabe hauptsächlich durch die Planarität des Wellenleiters bestimmt.

Bei planaren Wellenleitern ist im allgemeinen das für die Aufnahme eines Analyten vorgesehene Element, zum Beispiel ein Probenbehältnis in Form einer Vertiefung, im Kontakt zum Wellenleiter auf der wellenleitenden Schicht integriert. Die Probenbehältnisse können hierbei ein Volumen von 0,1 nl bis 100 µl und bevorzugt 10 nl bis 10 µl aufweisen. Die Probenbehältnisse können nach oben offen oder geschlossen sein, wobei es sich bei der zweitgenannten Ausbildungsform um Durchflusszellen handelt. Die planaren Wellenleiter mit aufgebrachten Probenbehältnissen werden im folgenden als Sensorplattform bezeichnet.

Die optischen Koppelelemente, vorzugsweise ausgebildet als diffraktive Gitter, können innerhalb und ausserhalb der Probenbehältnisse angeordnet sein. Hieraus ergeben sich unterschiedliche Anforderungen an die Eigenschaften der mit der wellenleitenden Schicht in Kontakt gebrachten zweiten Schicht, in der die Probenbehältnisse erzeugt sind. Liegen die optischen Koppelelemente innerhalb der Probenbehältnisse, so ergeben sich keine weiteren besonderen Anforderungen an die optischen Eigenschaften und ihre Anordnung bezüglich der Lage und Ausrichtung diffraktiver Gitter als optischer Koppelelemente. Zur Verminderung eines möglichen optischen Übersprechens zwischen benachbarten Sensorfeldern auf einer Sensorplattform ist die zweite Schicht in diesem Fall vorzugsweise absorbierend bei der zu detektierenden Lumineszenzwellenlänge.

Befinden sich die optischen Koppelelemente ausserhalb der Probenbehältnisse und sind damit vollständig von der zweiten Schicht bedeckt, was den Vorteil der Gewährleistung stabiler Auskoppelbedingungen hat, so muss die zweite, mit der Wellenleiteroberfläche in Kontakt stehende Schicht zumindest bei der Wellenlänge der zu detektierenden Lumineszenzwellenlänge mindestens bis zur Eindringtiefe des evaneszenten Feldes geführten Lumineszenzlichts, d. h. mindestens bis zu mindestens einer Wellenlänge, vorzugsweise bis zu mindestens 10 Mikrometern, transparent sein. Bei dieser Anordnung befindet sich die Umrandung der Probenbehältnisse vorteilhaft in einem Abstand von 1 Mikrometer bis zu einem Zentimeter, bevorzugter von 5 Mikrometern bis zu 5 mm von dem oder den diffraktiven Elementen. Vorzugsweise weist die in Kontakt mit der Wellenleiteroberfläche stehende zweite Schicht in diesem Bereich eine möglichst niedrige Oberflächenrauhigkeit von beispielsweise weniger als 2 nm RMS auf und hat einen lückenlosen Kontakt mit der Wellenleiteroberfläche, um eine Erhöhung von Streuverlusten an geführtem Lumineszenzlicht zu vermeiden.

Die Orientierung der Gitterlinien im Falle diffraktiver Gitter als Koppelelemente ist vorzugsweise im wesentlichen gleichgerichtet zum Verlauf der Umrandung der Probenbehältnisse. Im Falle von geschlossenen, zum Beispiel kreisförmigen oder elliptischen, diffraktiven Elementen befinden sich die Probenbehältnisse vorzugsweise in deren Mitte. Im Falle von zwei oder mehreren unterbrochenen diffraktiven Elementen befinden sich die Probenbehältnisse vorzugsweise in der Mitte zwischen gegenüberliegenden diffarktiven Elementen.

Die Sensorplattformen können so ausgebildet sein, dass sie aus nur einem Wellenleiter mit diffraktiven Elementen bestehen, oder sie können als ein- oder zweidimensionale Anordnung von wenigstens zwei Wellenleitern mit diffraktiven Elementen bestehen, wobei eine beliebige Anzahl von Wellenleitern mit diffraktiven Elementen hinter- und/oder nebeneinander angeordnet sein kann, zum Beispiel bis zu 100 oder mehr, vorteilhaft 2 bis 50 pro Reihe und / oder Zeile. Diese Anordnungen können zum Beispiel rechteckig oder rund sein. Insbesondere wenn die Probenbehältnisse nach oben offen sind, können vorteilhaft die äusseren Abmessungen der Sensorplattformen und die Anordnung der Probenbehältnisse der Form bekannter und gegebenenfalls genormter Mikrotiterplattenformen entsprechen, wobei die Anzahl der Probenbehältnisse auf einer Sensorplattform vorzugsweise ein ganzzahliges Vielfaches von 96 als dem traditionellen Standard für Mikrotiterplatten ist.

In diesem Zusammenhang kann bei Verwendung von ein- oder zweidimensionalen Anordnungen von wenigstens zwei Wellenleitern mit diffraktiven Elementen (Arrays) auf Probenbehältnisse verzichtet werden, und die zu untersuchende Analytprobe direkt auf den Messbereichen (Sensorfeldern) der wellenleitenden Schicht aufgebracht werden. Hierfür können bekannte Methoden wie zum Beispiel das Aufbringen mit Mikropipetten oder Tintenstrahldruckern angewendet werden.

Die Herstellung der Sensorplattformen mit offenen Probenbehältnissen kann nach an sich bekannten Verfahren erfolgen, zum Beispiel photolithographisch mittels photopolymerisierbarer Schichten, die auf der wellenleitenden Schicht aufgebracht werden, gegebenenfalls über eine haftvermittelnde Zwischenschicht, wobei diese zumindest bei der zu detektierenden Lumineszenzwellenlänge transparent sein muss, sofern sich die diffraktiven Elemente ausserhalb der Probenbehältnisse befinden. Eine andere Möglichkeit besteht in der Anwendung von Vakuumbedampfungsverfahren durch eine Maske, mit denen eine Vielzahl von Materialien aufgetragen werden kann, vor allem Oxide wie zum Beispiel SiO₂ oder Al₂O₃. Eine weitere Möglichkeit besteht in der Anwendung von Ablationsverfahren, wie zum Beispiel Ätzverfahren, mit Hilfe einer Maske und/oder Laserbestrahlung. Die Verfahren können auch kombiniert werden.

Bei Sensorplattformen mit ein- oder zweidimensionalen Anordnungen von mehr als einem mit diffraktiven Elementen zur Lumineszenzauskopplung ausgestatteten, in einer durchgehenden wellenleitenden Schicht gebildeten Sensorelementen kann es zweckmäsig sein, die Wellenleitung zwischen benachbarten Sensorelementen durch Auftragung von mindestens bei der zu detektierenden Lumineszenzwellenlänge absorbierenden Schichten zu unterbrechen. Die Auftragung der absorbierenden Schichten kann beispielsweise durch Aufstreichen oder Aufdrucken geschehen. Weiterhin kann dieses durch Aufdampfen von Metalloxiden, unter Anwendung von Vakuumbeschichtungsverfahren, erfolgen, oder unter Verwendung von lichtabsorbierenden Materialien, wie zum Beispiel mit Kohlenstoff oder geschwärzten Materialien gefüllten Zwischenaussparungen in der die Probenbehältnisse enthaltenden Schicht in Kontakt mit der Wellenleiteroberfläche. Hiermit werden Störungen durch Übersprechen von Anregungs- und / oder Lumineszenzlicht unterdrückt.

Die einzelnen Sensorelemente können auch durch eine Unterbrechung der wellenleitenden Schicht um das besagte Sensorelement getrennt werden, um Störungen durch Übersprechen zu vermeiden. Die Unterbrechung kann durch einfaches Entfernen der wellenleitenden Schicht in einem schmalen Bereich um das Element erzielt werden, zum Beispiel mechanisch mittels Kratzen, mittels Ätzverfahren oder Bestrahlen mit einem Laser. Weiterhin kann die Unterbrechung der wellenleitenden Schicht unter Verwendung von Masken bereits beim Aufbringen der wellenleitenden Schicht erreicht werden.

Ferner ist es möglich, Deckschichten aus einem für die Lumineszenzstrahlung und gegebenenfalls auch für die Anregungsstrahlung wenigstens im Bereich der Eindringtiefe des evaneszenten Feldes geführten Lumineszenzlichts, vorzugsweise bis zu wenigstens 10 Mikrometern, transparenten Materialien, sofern die diffraktiven Elemente ausserhalb der Probenbehältnisse liegen, vorzufertigen, gegebenenfalls mit wie oben beschriebenen lichtabsorbierenden Bereichen ausserhalb des Bereichs der Sensorfelder und der zugehörigen diffraktiven Elemente, und dann mit der wellenleitenden Schicht zu verbinden, gegebenenfalls mit Hilfe eines Haftvermittlers, für den dieselben Anforderungen an Transparenz oder Absorptionseigenschaften, in Abhängigkeit von der Lage bezüglich der diffraktiven Elemente, gelten.

Bei der Durchführung des erfindungsgemässen Verfahrens mit planaren Wellenleitern kann die Analytprobe von ausserhalb, das heisst vor oder zwischen den Auskoppelelementen direkt in einem geneigten oder vorzugsweise rechten Winkel, bezogen auf den Wellenleiter, (a) von oben durch die Analytprobe in Richtung zur wellenleitenden Schicht und durch den Wellenleiter oder (b) vorzugsweise von unten durch den Wellenleiter, aus Richtung des Trägermaterials, bestrahlt werden. Dabei kann es von Vorteil sein, durch Einsatz von Spiegeln auf der Einstrahlungsrichtung gegenüberliegenden Seite der Sensorplattform einen zweifachen Durchgang des Anregungslichts durch die Probe zu erzeugen, sofern durch die Gestaltung der optischen Anregungsgeometrie eine Erhöhung von auf die Detektionseinheiten fallendem Streulicht vermieden wird. Bei nach oben geschlossenen Probenbehältnissen der Sensorplattform und Einstrahlung des Anregungslicht aus Richtung des Trägermaterials kann beispielsweise die Oberseite der Ausnehmungen verspiegelt werden. Bei Einstrahlung des Anregungslichts von oben durch die Analytprobe kann die Aussenseite des Trägermaterials im Bereich der Probenbehältnisse und zwischen den diffraktiven Elementen verspiegelt werden.

Die gleichzeitige Bestrahlung ein- oder zweidimensionaler Arrays von Sensorelementen kann beispielsweise unter Verwendung eines grossflächig (zur gleichzeitigen Bestrahlung eines zweidimensionalen Arrays) oder elliptisch oder spaltförmig (zur gleichzeitigen Bestrahlung eines 1-dimensionalen Arrays) aufgeweiteten Lichtstrahls erfolgen. Dieses ist allerdings mit der Erzeugung unterschiedlicher Einstrahlungsintensitäten auf den verschiedenen Sensorelementen verbunden, was beispielsweise bei Verwendung von Lasern oder Laserdioden im wesentlichen auf deren gaussförmiges Strahlprofil zurückzuführen ist und bei der Auswertung der erzeugten Lumineszenzsignale berücksichtigt werden muss. Eine gleichmässigere Einstrahlungsintensität auf den verschiedenen Sensorelementen kann beispielsweise durch Vervielfältigung eines einzigen Anregungslichtstrahls, vorzugsweise von einem Laser oder einer Laserdiode, mittels eines Dammann-Gitters oder eines Mikrolinsen-Arrays, erreicht werden. Mittels eines Dammann-Gitters zur Erzeugung eines ein- oder zweidimensionalen Arrays einzelner Anregungsstrahlen aus einer einzelnen Lichtquelle kann eine sehr gleichmässige Intensität der Einzel-Anregungsstrahlen erreicht werden. Sofern ein zahlenmässig sehr grosses Array von Sensorelementen, beispielsweise von 100 oder mehr Sensorelementen, gleichzeitig beleuchtet werden soll, kann bei Verwendung kompakter und damit im allgemeinen relativ leistungssschwacher (bezüglich der Anregungsintensitäten) Anregungslichtquellen die Intensität der Einzelstrahlen sehr gering werden, was die erreichbaren Nachweisgrenzen des Verfahrens verschlechtern kann. Diesem kann einerseits durch die Verwendung leistungsstärkerer, aber im allgemeinen auch grösserer Anregungslichtquellen begegnet werden. Ist zugleich eine Miniaturisierung der Messanordnung erwünscht, so ist die Verwendung von Arrays miniaturisierter Laserdioden als Anregungslichtquellen bevorzugt. Geeignet sind beispielsweise Arrays von kantenemittierenden Laserdioden, wie sie derzeit in einem spektralen Bereich oberhalb von etwa 600 nm kommerziell erhältlich sind. Ganz besonders bevorzugt, insbesondere zur Verwendung mit Sensorarrays sehr hoher Dichte, sind sogenannte oberflächenemittierenden Vertikal-Kavitäts-Laserdioden (Vertical Cavity Surface Emitting Laserdiodes, VCSEL's), wie sie beispielsweise in den MINAST-News 2/1997, Seiten 13 und 14 beschrieben sind. Diese Laserdioden-Arrays zeichnen sich durch eine Vielzahl für den erfindungsgemässen Einsatz sehr günstiger Eigenschaften aus:
- sehr hohe Konversionseffizienz des Laserstroms in emittiertes Laserlicht und damit verbundene relativ niedrige Wärmeerzeugung, was eine hohe Packungsdichte auf einer Plattform, insbesondere bei zusätzlicher Verwendung von Kühlelementen, an die entsprechend relativ niedrige Ansprüche bestehen, erlaubt;
- sehr kleine Abmessungen der emittierenden Laser-Apertur im unteren Mikrometerbereich, was zusammen mit der vertikalen Anordnung der Laserkavität auf dem Träger und mit der möglichen hohen Packungsdichte eine extreme Miniaturisierbarkeit der Messanordnung erlaubt;
- sehr niedrige Variation der Emissionsintensitäten von auf einem einzigen Wafer hergestellten VCSEL's und Möglichkeit der selektiven Ansteuerung bei entsprechender Auslegung der Steuer-Elektronik;
- sehr geringe Öffnungswinkel des Emissionskegels bei Verwendung kleiner Austrittsöffnungen und monomodale Emission bis zu Milliwatt-Intensitäten bei Einsatz geringer Ansteuerungsströme;
- niedrige Herstellungskosten pro Einzel-VCSEL durch gleichzeitige Herstellung einer grossen Anzahl von VCSEL's auf einem einzigen Wafer.

Der im Nahfeld des Wellenleiters erzeugte Anteil der im Analytvolumen angeregten Lumineszenzstrahlung koppelt wenigstens teilweise in den Wellenleiter, wird in diesem geführt und an den optischen Koppelelementen ausgekoppelt. Das ausgekoppelte Lumineszenzlicht kann dann auf optoelektronische Detektionselemente gerichtet und gemessen werden.

Da, neben der Abhängigkeit von der Dicke der wellenleitenden Schicht, die Stärke des evaneszenten Feldes geführter Moden zusätzlich abhängig ist von deren Polarisation (transversal elektrisch, TE, oder transversal magnetisch, TM), was auch für den ähnlichen physikalischen Gesetzen unterliegenden Mechanismus der Einkopplung (des Eindringens) von im Nahfeld des Wellenleiters erzeugter Lumineszenz gilt, kann es von Vorteil zur Steigerung der Empfindlichkeit sein, das heisst zur Erreichung tieferer Nachweisgrenzen, die an den diffraktiven Elementen ausgekoppelte Lumineszenz polarisationsselektiv zu detektieren. Dieses wird dadurch erleichtert, dass die Auskopplung von Lumineszenzlicht gleicher Wellenlänge, aber unterschiedlicher Polarisation (TE oder TM) unter deutlich unterschiedlichen Winkeln erfolgt. Insbesondere im Falle der Auskopplung spektral breitbandiger, d.h. unter einem breiten Kegel ausgekoppelter, Lumineszenz, kann es von Vorteil sein, im Strahlengang der ausgekoppelten Lumineszenz zwischen den diffraktiven Auskoppelelementen und den optoelektronischen Detektionseinheiten zusätzlich polarisationsselektive optische Komponenten zu verwenden.

Weitere Angaben zum Aufbau einer Messanordnung und der Wahl von Lichtquellen, optischen Elementen zur Führung und Diskriminierung der Anregugungs- und Lumineszensstrahlung sowie Detektionseinheiten zur Bestimmung der Lumineszensstrahlung sind ausführlich in der WO 95/33197 und WO 95/33198 beschrieben.

Unter Verwendung von Messzellen, in welchen die Probenflüssigkeit in Kontakt mit den diffraktiven Koppelelementen kommt, tritt das Problem auf, dass sich die Bedingungen für die Einkopplung des Anregungslichts durch molekulare Adsorption oder Bindung auf den Einkoppelementen ändern können. Zusätzlich kann durch Anregung von ungebundenen lumineszenten oder fluoreszenten Molekülen mittels des Anteils des Anregungslichts, das nicht in den Wellenleiter eingekoppelt wird, sondern als nullte Ordnung ungebeugt in die Lösung eintritt, Untergrundlumineszenz oder -fluoreszenz in der Tiefe der Probe angeregt werden, welche über die optischen Koppelelemente teilweise in den Wellenleiter einkoppeln und die Genauigkeit und Empfindlichkeit der Bestimmung des Analyten beeinträchtigen kann.

In Analytical Chemistry, Band 62, Nr. 18 (1990), Seiten 2012-2017 wird eine auf einem optischen Wellenleiter mit Ein- und Auskoppelgitter aufgebrachte Durchflusszelle aus Silicon-Gummi beschrieben. Das Ein- und Auskoppelelement liegen im Bereich des Probenflusskanals. Es werden mit dieser Anordnung Veränderungen der Lichtabsorption und des Brechungsindexes gemessen, ohne eine selektive Wechselwirkung mit spezifischen Erkennungselementen an der Wellenleiteroberfläche. Für den Analyten, eine Farbstofflösung bei der absorptionsabhängigen Messung beziehungsweise Flüssigkeiten unterschiedlicher Brechzahlen bei der brechungsindexabhängigen Messung, werden Adsorptionserscheinungen auf der Oberfläche nicht in Betracht gezogen. Bei diesen sehr unempfindlichen Messungen sind tatsächlich die zu erwartenden Änderungen des effektiven Brechungsindex für einen im Wellenleiter geführten Mode, selbst bei Adsorption einer Monolage von Molekülen, vernachlässigbar gegenüber den starken Veränderungen des Brechungsindexes der zugeführten Lösungen, im Gegensatz zu den zu erwartenden Störungen bei der sehr viel empfindlicheren Methode der Bestimmung der im evaneszenten Feld erzeugten Lumineszenz. Im Falle der brechungsindexabhängigen Messmethode auf Grundlage der Änderung des Ein- oder Auskoppelwinkels ist der Probenkontakt mit den Koppelelementen selbstverständlich sogar notwendig zur Erzeugung des Messignals. Aufgrund dieser Konfiguration, mit innerhalb des Probenflusskanals befindlichem Ein- und Auskoppelelement, hat die Probenzelle lediglich die Aufgabe der Abdichtung gegen Flüssigkeitsaustritt, ohne jegliche weitere Ansprüche an optische Eigenschaften des Materials.

Es wurde nun überraschend gefunden, dass man dann mit Sensorplattformen die genannten Probleme überwinden kann, wenn die zur Probenaufnahme vorgesehene Schicht die Auskoppelemente zumindest im Bereich der geführten Lumineszensstrahlung vollständig bedeckt und für diese Strahlung im Bereich der Auflagefläche transparent ist.

Ein weiterer Gegenstand der Erfindung ist eine Sensorplattform aus einem planaren optischen Schichtwellenleiter, bestehend aus einem transparenten Träger und einer wellenleitenden Schicht, wobei der Wellenleiter wenigstens über ein Auskoppelelement zur Auskopplung von Anregungsstrahlung verfügt, und auf dessen wellenleitender Schicht sich eine weitere dicht verschliessende Schicht befindet, die wenigstens in einem Teilbereich der Anregungsstrahlung eine nach oben offene Aussparung, oder über einen Zuflusskanal und Abflusskanal verbundene, nach oben geschlossene Aussparung für eine Analysenprobe aufweist, deren Tiefe wenigstens der Eindringtiefe des evaneszenten Feldes des im Wellenleiter geführten Lumineszenslichts entspricht, und die Schicht aus einem Material besteht, das wenigstens an der Auflageoberfläche mindestens in der Eindringtiefe des evaneszenten Feldes des im Wellenleiter geführten Lumineszenslichts für dieses Lumineszenslicht transparent ist, und wobei das Auskoppelelement oder die Auskoppelelemente vom Material der Schicht wenigstens im Auskoppelbereich der Lumineszensstrahlung vollständig bedeckt ist.

Die Tiefe der Aussparungen beträgt bevorzugt wenigstens 1 µm, besonders bevorzugt wenigstens 10 µm.

Für den Wellenleiter gelten die zuvor angegebenen Ausführungen und Bevorzugungen, einschliesslich der ein- und zeidimensionalen Anordnungen.

Die eine Aussparung bildende Schicht ist wenigstens an der Auflageoberfläche für elektromagnetische Strahlung im Bereich der Lumineszenzwellenlänge transparent. Es kann sich um ein anorganisches Material wie zum Beispiel Glas oder Quarz oder um transparente organische Polymere (organische Gläser) wie zum Beispiel Polyester, Polycarbonate, Polyacrylate, Polymethacrylate oder Photopotymerisate handeln. Bevorzugt wird die Schicht von einem Elastomer gebildet. Besonders geeignet sind Elastomere von Polysiloxanen, wie zum Polydimethylsiloxane, bei denen es sich um weiche und schmiegsame sowie oft selbsthaftende Materialien handelt. Die Materialien für die Schicht sind bekannt und sind zum Teil im Handel erhältlich.

Die Schicht mit wenigstens einer Aussparung kann mittels üblicher Formgebungsverfahren hergestellt werden, zum Beispiel Giess- und Pressverfahren, oder mittels Schleif-, Stanz- und Fräsverfahren aus entsprechend vorgeformten Halbzeugen. Die Schicht kann auch aus photopolymerisierbaren Substanzen bestehen, die mittels lithographischer Verfahren direkt auf die wellenleitende Schicht aufgebracht werden können. Weiterhin kann die Schicht aus im wesentlichen anorganischen Materialien wie Si oder SiO₂ bestehen, in welchen die Probenbehältnisse mittels Ätzverfahren erzeugt werden, wobei im Bereich der Kontaktfläche mit zu führendem Lumineszenzlicht diese Materialien mindestens bis zur Eindringtiefe des evaneszenten Feldes geführten Lumineszenzlichts, vorzugsweise bis zu einer Tiefe von mindestens 1 µm, ganz besonders bevorzugt bis zu einer Tiefe von mindestens 10 µm, mindestens bei der Lumineszenzwellenlänge transparent sind.

Mit sehr glatten Oberflächen (Oberflächenrauhigkeit im Nanometerbereich oder darunter) kann bei steifen Materialien die Selbsthaftung durch Adhäsion zu dichten Verschlüssen führen. Elastomere sind im allgemeinen selbsthaftend. Eine möglichst geringe Oberflächenrauhigkeit ist auch sehr wünschenswert, um eine Lichtstreuung zu unterdrücken. In diesen Fällen wird die Schicht vorzugsweise als separater Körper hergestellt und auf den Wellenleiter, an dessen Oberfläche sich, gegebenenfalls auf einer zusätzlichen dünnen (d.h. < 100 nm) Haftvermittlungsschicht, immobilisierte Erkennungselemente befinden können, in dicht abschliessenden Kontakt aufgebracht.

Die Schicht kann aus einem einzigen, zumindest für die Lumineszenzwellenlänge der Analytprobe transparenten und lumineszenzfreien Material bestehen oder auch als zweilagige Schicht vorliegen, deren erste, welche mit der Wellenleiteroberfläche in Kontakt gebracht wird, bei der Lumineszenswellenlänge des Analyten transparent und lumineszenzfrei sein muss, während die anschliessende Deckschicht dann vorzugsweise strahlungsabsorbierend ausgebildet ist. Dabei umfasst die Dicke der ersten Schicht in Kontakt mit der Wellenleiteroberfläche wenigstens die Eindringtiefe des evaneszenten Feldes geführten Lumineszenzlichts, d. h. etwa eine Wellenlänge. Vorzugsweise ist diese erste Schicht 0,8 µm bis 10 mm, bevorzugter 0,01 mm bis 10 mm dick.

In einer vorteilhaften Ausgestaltung werden Brechungsindexsprünge auf der wellenleitenden Schicht, längs des Ausbreitungsweges des bis zu den optischen Auskoppelementen zu führenden Lumineszenzlichts, in der Auflageschicht minimiert. Dies kann dadurch erfolgen, dass die Begrenzung der Aussparung an der Auflage senkrecht zur wellenleitenden Schicht gerundet gestaltet ist. Gerundeter Uebergang senkrecht zur Oberfläche des Wellenleiters, an den Begrenzungen der Aussparungen, bedeutet, dass ein rechter Winkel vermieden wird. Die Rundung kann zum Beispiel Teil eines kreisförmigen, parabelförmigen oder hyperbelförmigen Verlaufs sein. Bei weichen und schmiegsamen Materialien für die Schicht bildet sich die Rundung durch das Anpressen auf den Wellenleiter von selbst aus. Die Rundung kann aber auch durch das Formgebungsverfahren vorgebildet werden. Brechungsindexsprünge können auch minimiert werden, wenn die Aussparung in Richtung der Ausbreitung des Lumineszenslichtes gegebenenfalls kontinuierlich verjüngt wird. Eine andere Möglichkeit besteht in der Wahl des Materials der die Aussparung bildenden Schicht mit einem Brechungsindex nahe oder gleich des Brechungsindexes der Analytprobe.

Enthält eine Sensorplattform eine Vielzahl von Sensorelementen und Probenbehältnissen, kann es vorteilhaft sein, zur Unterdrückung von Streustrahlung und / oder des optischen Übersprechens zwischen benachbarten Sensorelementen entlang der Aussparungen Licht absorbierende Materialien vorzusehen, zum Beispiel Farbstoffe, Pigmente, Russ, Metalloxide oder Metalle. Diese Materialien können in dafür vorgesehenen zusätzlichen Aussparungen längs der Berandungen der Probenbehältnisse, ausserhalb des Bereichs der zu den Sensorelementen gehörenden optischen Auskoppelemente auf der Oberfläche der wellenleitenden Schicht aufgebracht sein. Zweckmässig sind flächige Ausgestaltungen, die einfach mittels Streich- oder Bedampfungsverfahren herstellbar sind. Die Sensorplattform kann zum Beispiel so gestaltet sein, dass zwischen der Schicht und dem Wellenleiter beidseitig der oder jeder Aussparung im Spektralbereich evaneszent angeregter Strahlung absorbierendes Dämpfungsmaterial vorgesehen ist, oder dass das Dämpfungsmaterial als Immersion flächig aufgetragen ist, oder dass Dämpfungsausnehmungen vorgesehen sind, die mit Dämpfungsmaterial füllbar sind. Wenn durchgehende wellenleitende Schichten mit mehr als einem diffraktiven Element vorhanden sind, ist es ebenfalls zweckmässig, die Elemente mittels absorbierender Materialien zu trennen. Die Sensorplattform kann auch so ausgestaltet sein, dass die Sensorelemente durch Entfernen eines schmalen Bereichs des Wellenleiters um die Elemente unterbrochen ist.

Die erfindungsgemässe Sensorplattform kann in verschiedenen Ausführungsformen vorliegen, wobei zwischen Ausführungsformen mit offener Aussparung (Ausführungsform A) und geschlossener Aussparung (Ausführungsform B, Durchflusszellen) unterschieden wird.

### Ausführungsform A

Die offenen Ausnehmungen können eine an sich beliebige Form aufweisen; die Kontaktflächen zum Wellenleiter können zum Beispiel quadratisch, rechteckig, rund oder ellipsoid sein. Die Gestaltung von erfindungsgemässen Vorrichtungen kann zum Beispiel der Form bekannter Mikrotiterplatten entsprechen. Die geometrische Anordnung der Ausnehmungen ist an sich beliebig, wobei zweidimensionale Anordnungen bevorzugt sind. Für die Ausführungsform B dargestellte und beschriebene Vorrichtungen und Bevorzugungen können sinngemäss auch für die Ausführungsform A angewendet werden.

### Ausführungsform B

Bei einer erfindungsgemässen Sensorplattform zur Erzeugung angeregter Lumineszenzstrahlung, die wenigstens ein Auskoppelelement zur Auskopplung von im Nahfeld des Wellenleiters angeregter und in den Wellenleiter eingekoppelter Lumineszenz angeregter Strahlung aus dem Wellenleiter aufweist, ist es zweckmässig, dass die als Flusszelle ausgebildete Schicht auch das oder jedes Auskoppelelement bedeckt. In einer diesbezüglichen Weiterbildung ist vorgesehen, dass die Ausnehmung vollständig neben oder zwischen jedem Auskoppelelement angeordnet ist, so dass jedes Auskoppelelement frei von Probenmaterial ist. Dies hat den Vorteil, dass bei der Auskopplung von im Wellenleiter geführter Lumineszenzstrahlung gleichbleibende, vom Probenmaterial unbeeinflusste Kopplungsbedingungen herrschen.

In Weiterbildungen sind mehrere Ausnehmungen vorgesehen, die zwischen den unterschiedlichen Sensorfeldem zugeordneten Bereichen der Sensorplattform zu einer Unterbrechung einer Wellenleitung führen können. Dazu ist es zweckmässig, in diesem Anteil der Zwischenbereiche der zu den Sensorfeldem komplementären Ausnehmungen, ausserhalb der zu den Sensorteldem gehörenden optischen Koppelelemente, beispielsweise vom ultravioletten bis infraroten Spektralbereich absorbierendes Material vorzusehen, um ein Überkoppeln von Strahlungsanteilen zwischen den Ausnehmungen zu unterbinden. Dies kann beispielsweise durch eine absorbierende Schicht, die zwischen der Flusszelle und dem Wellenleiter aufgebracht wird, erfolgen. In einem anderen Ausführungsbeispiel sind dazu mit einer strahlungsabsorbierenden Flüssigkeit füllbare Dämpfungsausnehmungen in die Flusszelle eingebracht, die zu der gleichen Oberflächenseite wie die Ausnehmungen geöffnet sind.

Für einen Einsatz im routinemässigen Analysebetrieb ist es weiterhin zweckmässig, dass die im Kontakt zum Wellenleiter stehende Schicht aus einem schmiegsamen Material besteht, das die wenigstens eine Ausnehmung bei Aufbringen auf den Wellenleiter dicht verschliesst. Dadurch ist es ohne weitere Hilfsmittel wie Dichtungen im Falle nach oben geschlossener Ausnehmungen möglich, durch Auflegen einer Flusszelle auf den Wellenleiter leckfrei Probenmaterial durch die Flusszelle zu leiten.

Ein weiterer Gegenstand der Erfindung ist eine Vorichtung zur Messung von durch Anregungsstrahlung in einer Analytprobe erzeugter Lumineszens, bestehend aus
a) aus einem optischen Schichtwellenleiter mit einem transparenten Träger und einer wellenleitenden Schicht;
b) einer Analytprobe, die sich im Kontakt mit der wellenleitenden Schicht befindet;
c) einer elektrischen oder optischen Energiequelle, die so angeordnet ist, dass sich die Elektroden der elektrischen Energiequelle im direkten Kontakt mit der Analytprobe befinden, oder die Anregungsstrahlung der optischen Energiequelle in einem geneigten oder rechten Winkel direkt auf die Analytprobe gerichtet ist, oder einem Reservoir, enthaltend eine Chemikalie, mit der eine Chemilumineszens im Kontakt mit der Analytprobe angeregt wird; und
d) einer optoelektronischen Detektionseinheit zur Messung der durch Einwirkung eines elektrischen Feldes oder Anregungsstrahlung erzeugten Lumineszensstrahlung.

Bei den Wellenleitern a) handelt es sich bevorzugt um planare Wellenleiter, die über wenigstens ein Auskoppelement zur Auskopplung von Lumineszensstrahlung aufweisen, vorzugsweise diffraktive Elemente, und entsprechende Sensorplattformen.

Bei der Energiequelle c) handelt es sich bevorzugt um eine Lichtquelle und gegebenenfalls Fokussierlinsen, optischen Filter oder beides, deren Anregungsstrahlung in einem geneigten oder rechten Winkel entweder von oben durch die Analytprobe und den Wellenleiter oder von unten durch den Wellenleiter und die Analytprobe jeweils ausserhalb des oder der Auskoppelelemente geführt wird.

Für die erfindungsgemässe Vorrichtung gelten ansonsten die zuvor dargestellten Bevorzugungen und Ausführungsformen. Weitere Einzelheiten über optische Wellenleiter, optische Elemente zur Fokussierung, Filtern und Führung von Anregungs- und Lumineszenslicht sowie Detektionseinheiten für die angeregte Strahlung sind in den WO 95/33197 und WO 95/33198 beschrieben.

Das erfindungsgemässe Verfahren und die Vorrichtung eignen sich generell zur Bestimmung von Lumineszenzlicht, das im optischen Nahfeld eines Wellenleiters erzeugt wird, zum Beispiel chemisch, elektrisch oder bevorzugt optisch erzeugte Lumineszenzstrahlung. Die optische Anregung wird besonders in der Affinitätssensorik angewendet, bei der man unter Verwendung von geeigneten Fluorophoren und unter Immobiliserung von einem der Affinitätspartner die Bindung der Zielmoleküle an ihre entsprechenden Erkennungselemente detektiert. Dabei können die immobilisierten Affinitätspartner sowohl isoliert als auch eingebettet in grössere funktionale Strukturen bis hin zu ganzen Zellen angeordnet sein. Beispiele für solche Analysen sind die Human-, Tier- und Pflanzendiagnostik, die biochemische Analytik, die Untersuchung von Reaktionsgemischen zur Prozesskontrolle, und die Umweltanalytik. Die Analytproben sind bevorzugt flüssig, und es sind problemlos Messungen selbst in trüben Lösungen möglich. Bei den Analytproben kann es sich zum Beispiel um Eigelb, Blut, Serum, Plasma, Flüssigkeiten von inneren Organen (zum Beispiel des Lymphsystems) oder Pflanzenextrakte, Bodenextrakte, Wasserproben oder Synthesebrühen biochemischer Verfahren handeln. Das Verfahren ermöglicht zum Beispiel die qualitative oder quantitave (nach Eichung) Bestimmung von Antikörpern und Antigenen, Rezeptoren oder ihrer Liganden, Oligonukleotiden, DNA- oder RNA-Srängen, DNA- oder RNA-Analoga, Enzymen, Enzymsubstraten, Enzymkofaktoren oder Inhibitoren, Lektinen oder Kohlehydraten. Das Verfahren eignet sich auch für ein Affinitätsscreening in der Suche und Entwicklung von pharmazeutischen oder agrochemischen Wirksubstanzen, zur Analyse in der kombinatorischen Chemie, zur Geno-/Phenotypisierung und Mutationsanalyse von Proteinen und DNA-oder RNA-Strängen.

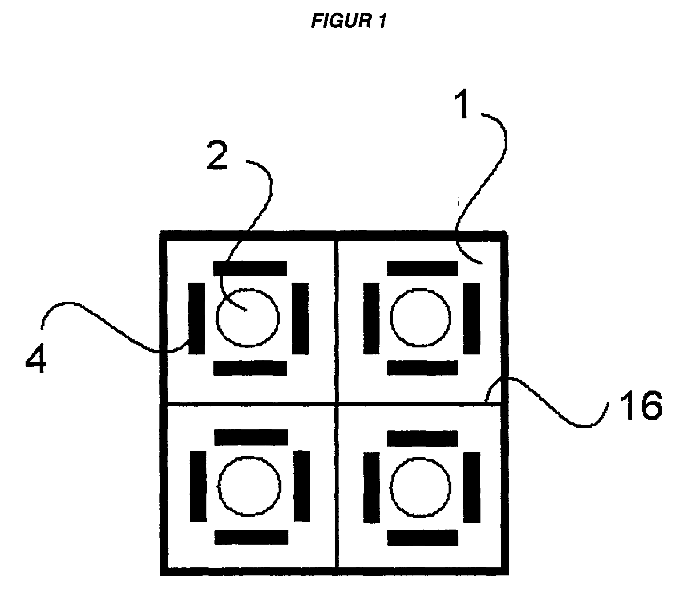

Figur 1 illustriert eine als Mikrotiterplatte ausgebildete Sensorplattform (1) mit vier Sensorfeldern dar. Hierbei handelt es sich bei 2 um Aussparungen für die Aufnahme einer Analytprobe 3, die sich zentral zwischen vier Auskoppelgittern 4 befinden. Die Sensorfelder sind mit Strukturen 16 aus lichtabsorbierendem Material optisch getrennt.

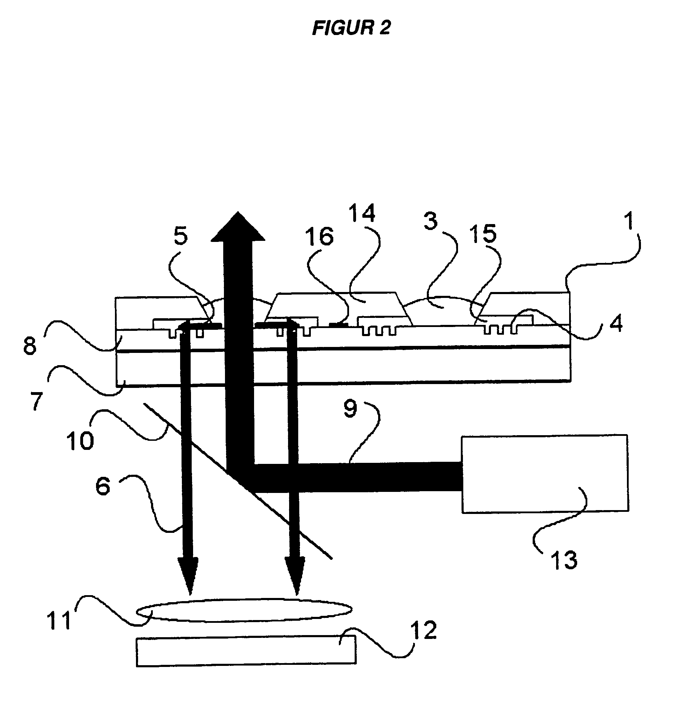

Figur 2 stellt eine erfindungsgemässe Messvorrivhtung dar. Hierbei stellt 1 eine als Mikrotiterplatte ausgebildete Sensorplatform dar, deren Sensorfelder sich zwischen Auskoppelgittern 4 für die Lumineszenzstrahlung 5,6 befinden. Die Analytproben 3 werden senkrecht durch das Substrat 7 und die wellenleitende Schicht 8 mit Anregungslichtstrahlen 9 beleuchtet. Die im Nahbereich in den Wellenleiter 8 eindringende und sich im Wellenleiter ausbreitende Lumineszenzstrahlung 5 wird über die Auskoppelgitter 4 als diskrete Strahlen 6 über einen dichroischen Spiegelfilter 10 zur Abbildungsoptik 11, und von dort zu einer Detektionseinrichtung 12 (CCD-Kamera oder Photovervielfältiger) geleitet. Die Anregungslichtstrahlen 9 werden über die reflektierende Fläche des dichroischen Spiegels (10) der Analytprobe (3) zugeführt. Die Anregungslichtstrahlen 9 entstammen einer Anregungslichtquelle (Laser) 13. Die Probenbehältnisse sind als Ausparungen einer Abdeckschicht 14 ausgebildet, die ausserhalb von im Nahbereich der Koppelgitter 4 angebrachten, optisch transparenten Zwischenschichten 15 aus lichtabsorbierendem Material besteht, um optisches Übersprechen zwischen benachbarten Aussparungen zu vermeiden. Neben einer absorbierenden Abdeckschicht 14 können zusätzlich direkt auf der als Mikrotiterplatte 1 ausgebildeten Sensorplatform zwischen den benachbarten Analytaussparungen Strukturen 16 aus lichtabsorbierendem Material (z.B. Chrom) direkt auf der wellenleitenden Schicht aufgebracht sein, um ein optisches Übersprechen von im Wellenleiter 8 sich ausbreitendem Lumineszenzlicht 5 zu unterbinden.

Das nachfolgende Beispiel erläutert die Erfindung näher.

### Beispiel:

Die Wirksamkeit des Anregungsverfahrens im Volumen einer Analytprobe 3 wird mit einem DNA-Hybridisierungsassay getestet. Der Wellenleiter besteht aus Corning Glas C7059 als Trägermaterial 7 und Ta₂O₅ als wellenleitender Schicht 8 (Schichtdicke 150 nm) und enthält zwei Auskoppelgitter 5 mit einer Modulationstiefe von ca. 10 nm und einer Gitterperiode von 320 nm. Die Aussparung für die Analytprobe befindet sich in der Mitte der Gitter in einem Abstand von 5 mm. Zur Immobilisierung von Oligonukleotid-Erkennungselementen ist die wellenleitende Oberfläche mit 3-Glycidoxypropyl-trimethoxysilan in Flüssigphase (ortho-Xylol) silanisiert. Das folgende Oligonukleotid ist als Erkennungselement auf der funktionalisierten Silanschicht mit einer typische Belegungsdichte von 10% kovalent immobilisiert:
Amino-(C6-Brückengruppe)-5'-CACAATTCCACACAAC-3'.
Die kovalente Bindung des Oligonukleotids erfolgt über die freie Aminogruppe des Oligonukleotids und der Epoxidgruppe der Silanschicht. Immobilisiert wird mit einer Oligonukleotidkonzentration von 0,1 mM Oligonukleotid in 100 mM Bikarbonatpuffer bei pH 8,7.

Als Nachweis eines spezifischen Bindungsassays dient die Hybrisisierung eines zum Erkennunngselement komplementären, während 3 Minuten im kontinuierlichen Fluss via Pufferlösung zugeführten Oligonukleotids. Das Nachweisoligonukleotid ist ebenfalls am 5'-Ende mit dem Fluoreszenzfarbstoff Cy5 markiert. Die Sequenz des Nachweisoligonukleotids ist wie folgt gegeben: Cy5 - 5'-GTTGTGTGGAATTGTG-3'.

Das komplementäre Oligonukleotid wird in steigenden Mengen von 0,5 bis 500 pM appliziert, wobei vor jeder Applikation die Sensoroberfläche mit NaOH (10 mM) regeneriert wird.

Die Anregungsfläche in der Analytprobe für das Laserlicht mit einer Wellenlänge von 633 nm beträgt 0.5 mm² und die Intensität des Anregungslichts beträgt 2,4 mW. Das Probenbehältnis wird von der Substratseite aus in einem Winkel von etwa 45° zur Substratnormalen beleuchtet. Die Beleuchtungsrichtung bildet zur Richtung des Fluoreszenzauskoppellichtes 6 an einem Koppelgitter 5 ebenfalls einen Winkel von etwa 45° (bei nahezu senkrechter Auskopplung) und hält somit durch die entgegengesetzten Anregungs- und Emissionsrichtungen sowie die örtlich voneinander getrennten Anregungs- und Emissionsorte das Untergrundsignal der Messung auf sehr niedrigem Niveau (und entsprechend niedrigem Rauschen).

Zur Bestimmung des optischen Antwortsignals wird das Verhältnis von Nettosignal (maximales Sensorsignal minus Hintergrundsignal in Puffer) zum Untergrundrauschen in Abhängigkeit von der Konzentration angegeben. Das Messergebnis ist in nachfolgender Tabelle dargestellt:

**Tabelle**

| | | | | | | | |
|---|---|---|---|---|---|---|---|
| Konzentration (pM): | 0.5 | 1 | 5 | 10 | 25 | 50 | 500 |
| Signal:Rauschen: | 1.5 | 3.5 | 11.7 | 53.5 | 58.0 | 118.8 | 225.1 |

Die Standardabweichungen der Signal:Rausch Werte aus drei hintereinader durchgeführten, konzentrationsabhängigen Messreihen beträgt ≤ 4 %.

## Patentansprüche

1. Verfahren zur Anregung und Bestimmung einer Lumineszens in einer Analytprobe (3), die sich mit der wellenleitenden Schicht (8) eines optischen Schichtwellenleiters in Kontakt befindet und wobei man die im Nahbereich der Oberfläche der wellenleitenden Schicht (8) erzeugte Lumineszensstrahlung nach dem Eindringen in besagte wellenleitende Schicht zu der Messvorrichtung (12) leitet und bestimmt, **dadurch gekennzeichnet, dass** man die Lumineszens durch nicht-evaneszente Anregung im Volumen der Analytprobe (3) erzeugt, wobei die nicht-evaneszente Anregung durch eines der folgenden Mittel erzeugt wird: (a) Elektroden, mit denen man unter Anlegung eines elektrischen Feldes eine Lumineszens erregt, (b) eine Kombination von Chemikalien, die eine Chemielumineszens erzeugt und (c) direkte nicht evaneszente Bestrahlung mit Licht.

2. Verfahren gemäss Anspruch 1, **dadurch gekennzeichnet, dass** die Lumineszensstrahlung elektrisch, chemisch oder durch optische Strahlungsanregung erzeugt wird.

3. Verfahren gemäss Anspruch 1, **dadurch gekennzeichnet, dass** als Schichtwellenleiter (3) ein planarer Wellenleiter mit Auskoppelelementen (4) für das Lumineszenslicht verwendet wird.

4. Verfahren gemäss Anspruch 1, **dadurch gekennzeichnet, dass** eine Sensorplattform (1) verwendet wird, die eine ein- oder zweidimensionale Anordnung von wenigstens zwei Wellenleitern mit diffraktiven Auskoppelelementen (4) aufweist.

5. Verfahren gemäss Anspruch 4, **dadurch gekennzeichnet, dass** die Sensorplattform mit einer zweiten Schicht bedeckt ist, die im Bereich des geführten Lumineszenslichts Aussparungen für die Aufnahme einer Analytprobe (3) enthält.

6. Verfahren gemäss Anspruch 3, **dadurch gekennzeichnet, dass** der planare Wellenleiter ein oder mehrere diffraktive Elemente zur Auskopplung der Lumineszensstrahlung enthält, und die Analytprobe (3) vor einem oder zwischen mehreren Auskoppelelementen (4) angeordnet ist.

7. Verfahren gemäss Anspruch 2, **dadurch gekennzeichnet, dass** die Anregungsstrahlung der optischen Strahlungsanregung von der Gegenseite der wellenleitenden Schicht durch einen planaren Wellenleiter auf eine Analytprobe (3) gerichtet wird.

8. Vorrichtung zur Messung von durch Anregung in einer Analytprobe (3) erzeugter Lumineszens, wobei die Lumineszens durch nicht-evaneszente Anregung im Volumen der Analytprobe (3) erzeugt wird, bestehend aus
a) einem optischen Schichtwellenleiter mit einem transparenten Träger (7) und einer wellenleitenden Schicht (8) die mit der Analytprobe kontaktierbar ist;
b) einer elektrischen oder optischen Energiequelle, die so angeordnet ist, dass sich Elektroden der elektrischen Energiequelle im direkten Kontakt mit der Analytprobe (3) befinden, oder die Anregungsstrahlung (9) der optischen Energiequelle in einem geneigten oder rechten Winkel direkt auf die Analytprobe gerichtet ist, oder einem Reservoir, enthaltend eine Chemikalie, mit der eine Chemielumineszens im Kontakt mit der Analytprobe angeregt wird; und
c) einer optoelektronischen Detektionseinheit (12) zur Messung der durch Einwirkung eines elektrischen Feldes oder Anregungsstrahlung oder chemisch erzeugten Lumineszensstrahlung (5, 6).

9. Vorrichtung gemäss Anspruch 8, **dadurch gekennzeichnet, dass** es sich bei den Wellenleitern um planare Wellenleiter handelt, die wenigstens ein Auskoppelelement (4) zur Auskopplung von Lumineszensstrahlung aufweisen.

10. Vorrichtung gemäss Anspruch 8 oder 9, **dadurch gekennzeichnet, dass** man die Lumineszens durch nicht-evaneszente Anregung im Volumen der Analytprobe (3) erzeugt, wobei die nicht-evaneszente Anregung durch Elektroden, mit denen man unter Anlegung eines elektrischen Feldes eine Lumineszens erregt, erzeugt wird.

11. Vorrichtung gemäss Anspruch 8 oder 9, **dadurch gekennzeichnet, dass** man die Lumineszens durch nicht-evaneszente Anregung im Volumen der Analytprobe (3) erzeugt, wobei die nicht-evaneszente Anregung durch eine Kombination von Chemikalien, die eine Chemielumineszens erzeugt, erzeugt wird.

12. Vorrichtung gemäss Anspruch 8 oder 9, **dadurch gekennzeichnet, dass** man die Lumineszens durch nicht-evaneszente Anregung im Volumen der Analytprobe (3) erzeugt, wobei die nicht-evaneszente Anregung durch direkte nicht evaneszente Bestrahlung mit Licht erzeugt wird.

## Claims

1. Method for exciting and determining a luminescence in an analyte sample (3) which is located in contact with the waveguiding layer (8) of an optical layer waveguide, and the luminescence radiation generated in the immediate proximity of the surface of the waveguiding layer (8) being conducted to the measuring device (12) and determined after penetrating said waveguiding layer, **characterized in that** the luminescence is generated by non-evanescent excitation in the volume of the analyte sample (3), the non-evanescent excitation being generated by one of the following means: (a) electrodes used to excite a luminescence by applying an electric field, (b) a combination of chemicals which generates a chemiluminescence, and (c) direct non-evanescent irradiation with light.

2. Method according to Claim 1, **characterized in that** the luminescence radiation is generated electrically, chemically or by optical excitation of radiation.

3. Method according to Claim 1, **characterized in that** use is made as layer waveguide (3) of a planar waveguide with outcoupling elements (4) for the luminescence light.

4. Method according to Claim 1, **characterized in that** use is made of a sensor platform (1) which has a one- or two-dimensional arrangement of at least two waveguides with diffractive outcoupling elements (4).

5. Method according to in Claim 4, **characterized in that** the sensor platform is covered with a second layer which contains cutouts for holding an analyte sample (3) in the region of the guided luminescence light.

6. Method according to Claim 3, **characterized in that** the planar waveguide contains one or more diffractive elements for coupling out the luminescence radiation, and the analyte sample (3) is arranged in front of one or between a plurality of outcoupling elements (4).

7. Method according to Claim 2, **characterized in that** the excitation radiation of the optical excitation of radiation is directed onto an analyte sample (3) from the opposite side of the waveguiding layer by a planar waveguide.

8. Device for measuring luminescence generated in an analyte sample (3) by excitation, the luminescence being generated by non-evanescent excitation in the volume of the analyte sample (3), consisting of
a) an optical layer waveguide with a transparent substrate (7) and a waveguiding layer (8) which can make contact with the analyte sample;
b) an electric or optical energy source which is arranged such that electrodes of the electric energy source are located in direct contact with the analyte sample (3), or the excitation radiation (9) of the optical energy source is directed directly onto the analyte sample at an inclined or right angle, or a reservoir containing a chemical which excites a chemiluminescence in contact with the analyte sample; and
c) an optoelectronic detection unit (12) for measuring the luminescence radiation (5, 6) generated by the action of an electric field or excitation radiation or chemically.

9. Device according to Claim 8, **characterized in that** the waveguides are planar waveguides which have at least one outcoupling element (4) for coupling out luminescence radiation.

10. Device according to Claim 8 or 9, **characterized in that** the luminescence is generated by non-evanescent excitation in the volume of the analyte sample (3), the non-evanescent excitation being generated by electrodes used to excite a luminescence by applying an electric field.

11. Device according to Claim 8 or 9, **characterized in that** the luminescence is generated by non-evanescent excitation in the volume of the analyte sample (3), the non-evanescent excitation being generated by a combination of chemicals which generates a chemiluminescence.

12. Device according to Claim 8 or 9, **characterized in that** the luminescence is generated by non-evanescent excitation in the volume of the analyte sample (3), the non-evanescent excitation being generated by direct non-evanescent irradiation with light.

## Revendications

1. Procédé pour l'excitation et la détermination d'une luminescence dans un échantillon d'analyte (3), qui se trouve en contact avec la couche guide d'ondes (8) d'un guide d'ondes optique à couche, le rayonnement luminescent produit dans le domaine proche de la surface de la couche guide d'ondes (8) étant, après pénétration dans ladite couche guide d'ondes, acheminé dans le dispositif de mesure (12), et déterminé, **caractérisé en ce qu'**on produit la luminescence par excitation non évanescente dans le volume de l'échantillon d'analyte (3), l'excitation non évanescente étant produite par l'un des moyens suivants : (a) des électrodes, à l'aide desquelles on excite une luminescence par application d'un champ électrique, (b) une combinaison de produits chimiques, qui produit une chimioluminescence, et (c) une exposition lumineuse directe non évanescente à la lumière.

2. Procédé selon la revendication 1, **caractérisé en ce que** le rayonnement luminescent est produit de façon électrique, chimique, ou par une excitation optique du rayonnement.

3. Procédé selon la revendication 1, **caractérisé en ce qu'**on utilise en tant que guide d'ondes à couche (3) un guide d'ondes plan, comportant des éléments de sortie (4) pour la lumière de luminescence.

4. Procédé selon la revendication 1, **caractérisé en ce qu'**on utilise une plate-forme captrice (1), qui présente un arrangement unidimensionnel ou bidimensionnel d'au moins deux guides d'ondes avec des éléments de sortie diffractifs (4).

5. Procédé selon la revendication 4, **caractérisé en ce que** la plate-forme captrice est recouverte d'une deuxième couche, qui dans la zone de la lumière de luminescence acheminée contient des évidements pour recevoir un échantillon d'analyte (3).

6. Procédé selon la revendication 3, **caractérisé en ce que** le guide d'ondes plan contient un ou plusieurs éléments diffractifs pour la sortie du rayonnement de luminescence, et que l'échantillon d'analyte (3) est disposé en avant d'un élément de sortie (4), ou entre plusieurs d'entre eux.

7. Procédé selon la revendication 2, **caractérisé en ce que** le rayonnement d'excitation de l'excitation par un rayonnement optique est dirigé sur un échantillon d'analyte (3), à partir du côté opposé de la couche guide d'ondes, en passant par un guide d'ondes plan.

8. Dispositif pour la mesure de la luminescence produite par excitation dans un échantillon d'analyte (3), la luminescence étant produite par excitation non évanescente dans le volume de l'échantillon d'analyte (3), consistant en
a) un guide d'ondes optique à couche, comportant un support transparent (7) et une couche guide d'ondes (8), qui peut être mis en contact avec l'échantillon d'analyte ;
b) une source d'énergie électrique ou optique, qui est disposée de façon que des électrodes de la source d'énergie électrique se trouvent en contact direct avec l'échantillon d'analyte (3), ou que le rayonnement d'excitation (9) de la source d'énergie électrique soit dirigé directement sur l'échantillon d'analyte selon un angle aigu ou un angle droit, ou un réservoir contenant un produit chimique à l'aide duquel une chimioluminescence est excitée lors du contact avec l'échantillon d'analyte ; et
c) une unité de détection optoélectronique (12) pour la mesure du rayonnement de luminescence (5, 6), produit par action d'un champ électrique, ou d'un rayonnement d'excitation, ou par voie chimique.

9. Dispositif selon la revendication 8, **caractérisé en ce que,** pour ce qui concerne les guides d'ondes, il s'agit de guides d'ondes plans, qui comprennent au moins un élément de sortie (4) pour la sortie du rayonnement de luminescence.

10. Dispositif selon la revendication 8 ou 9, **caractérisé en ce qu'**on produit la luminescence par excitation non évanescente dans le volume de l'échantillon d'analyte (3), l'excitation non évanescente étant produite par des électrodes, à l'aide desquelles on excite une luminescence par application d'un champ électrique.

11. Dispositif selon la revendication 8 ou 9, **caractérisé en ce qu'**on produit la luminescence par excitation non évanescente dans le volume de l'échantillon d'analyte (3), l'excitation non évanescente étant produite par une combinaison de produits chimiques qui produit une chimioluminescence.

12. Dispositif selon la revendication 8 ou 9, **caractérisé en ce qu'**on produit la luminescence par excitation non évanescente dans le volume de l'échantillon d'analyte (3), l'excitation non évanescente étant produite par un rayonnement lumineux direct non évanescent.
